# EUROPEAN PATENT SPECIFICATION

(11) **EP 1 716 797 B1**
(45) Date of publication and mention of the grant of the patent: **14.03.2012**
(21) Application number: 05425270.5
(22) Date of filing: 29.04.2005
(51) Int. Cl.: A47J 31/44

(54) **Method for preparing a drink, for example chocolate, and device for preparing the drink**
Verfahren zur Zubereitung eines Getränkes und Vorrichtung dazu
Méthode pour la préparation d'un boisson, par exemple du chcocolat, et dispositif pour la préparation du boisson

(43) Date of publication of application: 02.11.2006
(73) Proprietor: UNICALL S.r.l., 25060 POLAVENO (IT)
(72) Inventor: Labemano, Edoardo, 25060 Polaveno (IT); Peli, Davide, 25060 Polaveno (IT); Ongaro, Enrico, 25068 Sarezzo (IT)
(74) Representative: Crippa, Paolo Ernesto

(56) References cited:
- WO-A-97/27793
- US-A- 5 498 757
- US-A1- 2004 009 281

## Description

. The present invention relates to a method for preparing a hot drink, for example chocolate, and to a device for carrying out the method. Such methods are described for example in document US 5 498 757 A.

. In particular, the object of the present invention is a device for preparing chocolate, particularly adapted for use in the professional field, for example in a bar or a confectionery, and sometimes, also for household use.

. It is known that hot chocolate, especially in the colder seasons, is one of the most appreciated drinks by the customers of a bar.

. According to the conventional method for preparing hot chocolate, an amount of milk and a dose of powder preparation for chocolate are poured in a container.

. The steam nozzle of a conventional bar coffee machine is dipped in the milk mixed with the powder preparation and the mixture is heated until it reaches the temperature that enables the chocolate preparation.

. As it will be understood, this procedure does not ensure the preparation of an optimum drink as regards temperature and density, as these factors that strongly affect the pleasantness of the drink, depend on the barman's way of operating.

. Moreover, the steam nozzle, after being dipped in the milk mixed with the powder preparation, is dirty and must be immediately cleaned, to prevent the formation of deposits that, as known, are difficult to remove.

. Some solutions known in the field relating to devices for preparing chocolate provide for a washing cycle, with considerable complication of the device itself, to be carried out also between one preparation and the next one, to prevent the formation of deposits into the ducts.

. The object of the present invention is to provide a method and obtain a device for the preparation of a drink, for example chocolate, which should overcome the disadvantages mentioned with reference to the prior art.

. Such object is achieved by a method of preparation according to claim 1, which can be carried out by a device according to claim 10. The dependent claims describe alternative embodiments of the method and of the device.

. The features and advantages of the method and of the device according to the present invention will appear more clearly from the following description, made by way of an indicative non-limiting example with reference to the annexed drawings, wherein:

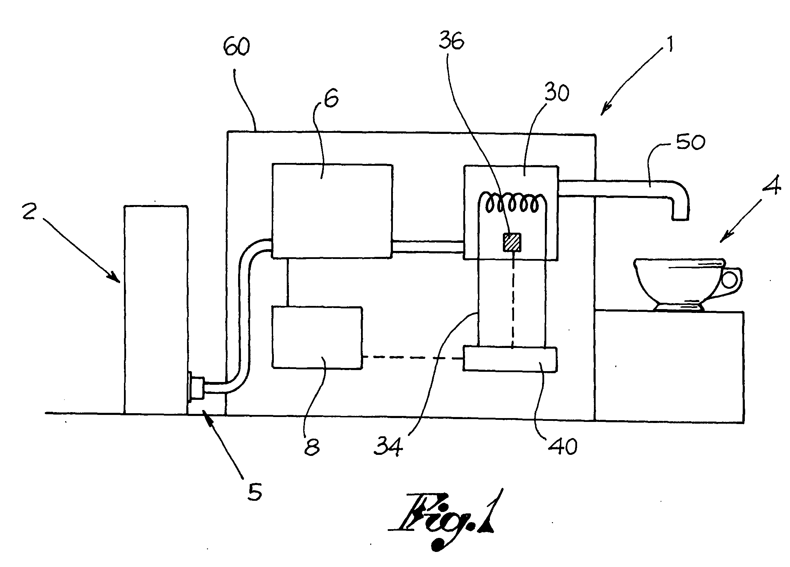

. - figure 1 shows a diagrammatic view of a device for the preparation of a drink, according to the present invention;

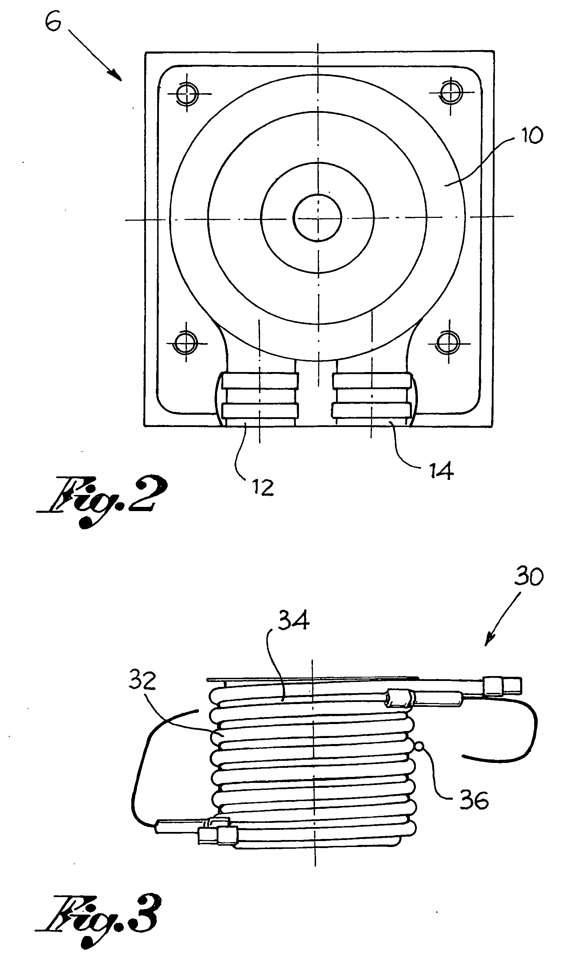

. - figure 2 shows a diagrammatic view of a pump of said device;

. - figure 3 shows a diagrammatic view of a heater of said device.

. With reference to the annexed figures, reference numeral 1 denotes a device for preparing a drink, for example chocolate.

. Device 1 can be associated to a container 2 adapted for containing a drink to be prepared and associable to a cup 4 for containing a prepared drink.

. Preferably, said device 1 comprises connection means 5 adapted for obtaining a fluid connection between said suction means and said container. Moreover, said connection means 5 are adapted for preventing the inlet of air into the container.

. Moreover, device 1 comprises suction means adapted for sucking said drink to be prepared from said container and dispensing means adapted for dispensing said heated drink to said cup 4.

. According to a preferred embodiment, said suction means and said dispensing means consist of a pump unit comprising a pump 6 and a motor 8 adapted for actuating sad pump 6.

. Preferably, said pump unit is of the peristaltic type, that is, it comprises a pump of the peristaltic type.

. In other words, said pump comprises a flexible chamber 10 that exhibits an inlet 12 for the inlet of the drink to be prepared, and an outlet 14 for the outlet of the drink to be prepared. Said flexible chamber is in fluid communication with said container 2.

. Moreover, pump 6 comprises a rotor adapted for rotating at a given speed and for compressing at least one portion of said flexible chamber sucking said drink to be prepared and dispense it.

. Preferably, moreover, said rotor comprises at least one compression bearing, free to rotate, in contact with said flexible chamber 10 for compressing it.

. According to a preferred embodiment, said bearing is made of Nylon® charged with lubricant, for example oil, and preferably with glass. For example, said bearing is made of Nyloil®, a material produced and marketed by Cast Nylons Ltd. Corporation (Ohio 30170 - Lakeland - Boulevard Wickliffe - Ohio 44902).

. The bearing exhibits the capability of being brought at high rotation speeds, without causing pump jamming and without undergoing breakages, also when hot.

. Moreover, said device 1 comprises heating means, adapted for heating said drink to be prepared for obtaining a drink heated at a given temperature.

. According to a preferred embodiment, said heating means comprise a heater 30 having external resistor not in contact with the drink to be prepared. Preferably, said heater is made of stainless steel.

. Heater 30 is in fluid communication with outlet 14 of pump 6.

. In particular, heater 30 comprises a heating duct 32, adapted for the flow of said drink to be prepared, externally coupled to a resistor 34 for heat generation.

. Preferably, the heating duct 32 winds round a substantially cylindrical surface, for example following a helical pattern.

. According to a preferred embodiment, said heating duct winds round an axis that, into the device, is arranged vertically or inclined, so that the fluid flowing therein, if not pushed by the pump, stops or even flows back downwards.

. Moreover, said device 1 comprises temperature sensing means adapted for sensing the temperature of the drink being heated, transforming said temperature into temperature data. For example, said sensing means comprise a probe 36.

. Moreover, said device comprises control means 40 operatively connected to said heating means for changing the temperature at which said heated drink must be heated.

. Said control means 40, moreover, are operatively connected to said suction means and to said dispensing means for controlling the actuation and/or the stop thereof.

. Said control means 40, moreover, are operatively connected to said temperature sensing means for acquiring said temperature data.

. According to a preferred embodiment, said control means comprise a processor adapted for processing the temperature data transmitted by the heating means.

. Device 1 comprises, moreover, a dispensing duct 50, in fluid connection with said heating means, at least partly protruding from the device, for pouring said prepared drink in said cup 4.

. According to a preferred embodiment, device 1 comprises a covering 60 adapted for housing said suction means and said heating means.

. Device 1 comprises, moreover, a control panel for the selection of an operating program. Preferably, said control panel is a membrane keyboard, arranged frontally relative to said covering 60, in position adapted for being easily accessible to the operator.

. Said control panel comprises a plurality of light indications or buttons, each button corresponding to an operating program and each indication corresponding to a device operating test.

. For example, said control panel comprises a first light indication for fault signalling. Said control panel further comprises:

. - a first button for selecting a device load or wash program;

. - a second button for selecting a program for preparing the drink in small cup;

. - a third button for selecting a program for preparing the drink in large cup;

. - a fourth button for selecting a program for preparing the drink at a first temperature;

. - a fifth button for selecting a program for preparing the drink at a second temperature, lower than the first one;

. To prepare the chocolate, a method of preparation is carried out, comprising a step of providing said container 2 containing the drink to be prepared.

. Preferably, container 2 is for the food grade, generally of cardboard or other material suitable for containing a food liquid, adapted for preventing the exposure of the drink to be prepared to the air, when closed.

. The drink to be prepared is a food liquid that, heated at a preparation temperature, comprised between a lower limit temperature and an upper limit temperature, gives the prepared drink. For example, the drink to be prepared is a liquid that, when heated, makes hot chocolate.

. If the drink to be prepared is heated below said lower limit temperature, it does not undergo any significant alteration of the organoleptic, chemical and physical properties, so when back at room temperature, it exhibits the same properties as the non-heated liquid.

. If the drink to be prepared is heated at a higher temperature than the upper limit temperature, it takes an unpleasant, bitterish taste, typical of "burnt" food.

. If the drink to be prepared is exposed to air for an interval of time, it degrades and cannot be used anymore as food.

. The container is associated to said connection insert that, once inserted through the container wall, is adapted for preventing air inlet into the container itself.

. Container 2 is associated to device 1 through connection means 5, also adapted for preventing air inlet into the container.

. An operating program is selected by the control panel of device 1.

. For example, the drink loading program is selected. This selection, carried out keeping a button pressed, corresponds to a start of the suction and dispensing means that make the drink to be prepared come out of the dispensing duct 50, without being prepared.

. When the drink comes out of the dispensing duct, dispensing and suction are stopped by releasing the button.

. In this configuration, called start up configuration, the drink to be prepared is in the dispensing duct, in the heater heating duct, in the flexible chamber of the pump unit, at room temperature, since the heater has not been actuated.

. Afterwards, the drink preparation program is selected, in large or small cup, and at the desired preparation temperature.

. This selection corresponds to an actuation of the heater that heats the drink to be prepared present in the heating duct, up to the preparation temperature.

. The probe senses the temperature of the drink to be prepared present in the heating duct. When said temperature is equal to the preparation temperature, the control means actuate the pump unit. The drink to be prepared, brought to the preparation temperature, makes said heated drink.

. Following such actuation of the pump unit, further drink to be prepared is sucked in the container and dispensed to the heater. The heated drink flows towards the dispensing duct and is poured in the cup, while said further drink to be prepared passes in the heater and heats, reaching the preparation temperature, and is dispensed to the cup.

. At a given time, for example determined by the control means, or fixed, for example at a time defined by a fixed time interval before the desired amount of prepared drink is reached, for example thirteen seconds before the desired amount of prepared drink is reached, the control means influence said heating means, for example switching them off, for changing the temperature at which the drink to be prepared is heated.

. In this way, the drink to be prepared is heated at a lower temperature and is dispensed to the cup, until once the desired amount of prepared drink has been reached, the pump unit is switched off and a drink to be prepared remains in the dispensing duct, in the heating duct and in the flexible chamber, at a lower temperature than the limit preparation temperature.

. The device is thus ready for a new preparation and the drink to be prepared that is in the dispensing duct, in the heating duct and in the flexible chamber has not been heated at such temperature as to affect the organoleptic properties and such as to cause deposits.

. Moreover, the entire preparation cycle is carried out in anaerobiosis conditions, so the device is adapted for remaining in such conditions, that is in the start up configuration, ready for a new use, without forming deposits and without causing the degradation of the drink to be prepared.

. In order to setup the device for a long stop, for example close to summer, a container with hot water is placed in replacement of the container and a washing cycle similar to the loading cycle is carried out.

. Innovatively, the device according to the invention allows the preparation of hot chocolate quickly and without carrying out repeated washing cycles to prevent the formation of deposits.

. The device, in fact, works in anaerobiosis conditions and moreover, the drink to be prepared held in the device ducts between one preparation and the following one is not subject to heating.

. The drink heated at a preparation temperature is in fact pushed out of the dispensing duct of the drink to be prepared, especially for the fact that the drink to be prepared exhibits a higher density than the density of the heated drink.

. Advantageously, moreover, the device allows sucking the drink to be prepared even if it is very thick, especially thanks to the provision of a peristaltic pump.

. According to a further advantageous aspect, the pump is adapted for rotating at a very high number of revolutions, without showing reliability problems.

. Advantageously, moreover, the device is compact even if the heating of the drink to be heated occurs with said drink moving along the heating duct.

. It is clear that a man skilled in the art can make several changes and adjustments to the method and device described above in order to meet specific and incidental needs, all falling within the scope of protection defined in the following claims.

## Claims

1. A method for preparing a prepared drink starting from a drink to be prepared, said method being carried out with a preparation device (1) associable to a container (2) adapted for containing said drink to be prepared and associable to a cup (4) adapted for containing said prepared drink, wherein said method comprises the steps of:
- heating a first amount of said drink to be prepared for obtaining a first amount of heated drink;
- introducing at least one portion of said first amount of heated drink in a dispensing duct (50) in fluid communication with said cup (4);
- dispensing at least one part of said portion of the first amount of heated drink to said cup (4);
- heating a second amount of said drink to be prepared at a second temperature, obtaining a second amount of heated drink;
- introducing at least one portion of said second amount of heated drink into said dispensing duct (50) for ejecting at least partly said first amount of heated drink from said dispensing duct (50),
wherein said second temperature is lower than a lower limit temperature for preparing the drink.

2. A method according to claim 1, wherein said step of heating said second amount of said drink to be prepared comprises a step of interrupting the actuation of heating means adapted for heating said drink to be heated.

3. A method according to any one of the previous claims, wherein said step of introducing said portion of the first amount of heated drink and said step of heating said second amount of the drink to be prepared are concurrent.

4. A method according to any one of the previous claims, wherein said heating steps comprise a step of passing said drink to be prepared in a heating duct (32), wherein said step of passing comprises a step of continuously passing said drink to be prepared into said heating duct (32) to obtain a given amount of prepared drink.

5. A method according to any one of the previous claims, further comprising a step of sucking said drink to be prepared from a container (2), wherein said suction step comprises a step of compressing a flexible chamber (10) of a pump unit (6).

6. A method according to any one of the previous claims, wherein said dispensing steps comprise a step of compressing a flexible chamber (10) of a pump unit (6).

7. A method according to any one of the previous claims, wherein said heating steps and said dispensing steps are carried out in a vacuum.

8. A method according to any one of the previous claims, wherein said heating steps and said dispensing steps are carried out in anaerobiosis conditions.

9. A method according to any one of the previous claims, further comprising a step of arranging a container (2) adapted for containing said drink to be prepared to be associated to a device for preparing the drink,
wherein said arrangement step comprises a step of inserting through the walls of said container (2) a connection insert adapted for being associated to an outlet of said device,
wherein said arrangement step comprises the step of making a hole through said wall of the container (2), wherein said step of arranging said container (2) comprises a step of seating said container in a seating of said device (1).

10. A device (1) for preparing a drink, for example chocolate, associable to a container (2) adapted for containing a drink to be prepared and associable to a cup (4) for containing a prepared drink, wherein said device (1) comprises:
- suction means adapted for sucking said drink to be prepared from said container (2);
- heating means, adapted for heating said drink to be prepared for obtaining a drink heated at a given temperature;
- dispensing means adapted for dispensing said heated drink to said cup, wherein said dispensing means comprise a dispensing duct (50) adapted for dispensing said heated drink in said cup (4);
said device being **characterised in that** in a first start up configuration, previous to the dispensing of said heated drink, said dispensing duct (50) holds said drink to be prepared.

11. A device (1) according to claim 10, wherein said device, in a second configuration of end of preparation, following the dispensing of the heated drink, still holds said drink to be prepared.

12. A device (1) according to claim 10 or 11, said device being **characterised in that** it further comprises control means (40) adapted for influencing said heating means (30) for changing said temperature of the heated drink.

13. A device according to claim 12, wherein said suction means comprise a peristaltic pump (6) unit.

14. A device according to claim 13, wherein said peristaltic pump (6) unit comprises a flexible chamber (10) that exhibits an inlet (12) for the inlet of the drink to be prepared and an outlet (14) for the outlet of the drink to be prepared, said flexible chamber (10) being in fluid communication with said heating means (30) and with said container (2), and wherein said pump unit (6) further comprises a rotor adapted for rotating at a given speed and for compressing at least one portion of said flexible chamber (10) for sucking said drink to be prepared and delivering it towards said heating means (30), wherein said rotor comprises at least one compression bearing adapted for influencing said flexible chamber, wherein said bearing is made of nyloil®.

15. A device according to any one of claims from 10 to 14, wherein said heating means (30) comprise a heating duct (32), adapted for the passage of said drink to be prepared, said duct being externally coupled to a resistor (34) for heat generation.

16. A device according to claim 15, wherein said duct winds round a substantially cylindrical surface.

17. A device (1) according to any one of claims from 10 to 16, further comprising connection means adapted for obtaining a sealed fluid connection between said suction means and said container.

18. A device according to any one of claims from 10 to 17, comprising a covering (60) adapted for housing said suction means and said heating means.

## Patentansprüche

1. Verfahren zur Zubereitung eines Fertiggetränks beginnend von einem zuzubereitenden Getränk, wobei das Verfahren mit einer Zubereitungsvorrichtung (1) ausgeführt wird, die mit einem Behälter (2) verbindbar ist, der geeignet ist, um das zuzubereitende Getränk aufzunehmen, und mit einem Becher (4) verbindbar ist, der geeignet ist, um das zubereitete Getränk aufzunehmen, wobei das Verfahren die folgenden Schritte umfasst:
- Erhitzen einer ersten Menge des zuzubereitenden Getränks, um eine erste Menge des erhitzten Getränks zu erhalten;
- Einleiten wenigstens einer Portion der ersten Menge des erhitzten Getränks in einen Abgabekanal (50) in Fluidverbindung mit dem Becher (4);
- Abgeben wenigstens eines Teils der Portion der ersten Menge des erhitzten Getränks in die Tasse (4);
- Erhitzen einer zweiten Menge des zuzubereitenden Getränks auf eine zweite Temperatur, wobei eine zweite Menge des erhitzten Getränks erhalten wird;
- Einleiten wenigstens einer Portion der zweiten Menge des erhitzten Getränks in den Abgabekanal (50) zum zumindest teilweisen Auslassen der ersten Menge des erhitzten Getränks aus dem Abgabekanal (50),
wobei die zweite Temperatur niedriger als eine untere Grenztemperatur für die Zubereitung des Getränks ist.

2. Verfahren nach Anspruch 1, wobei der Schritt des Erhitzens der zweiten Menge des zuzubereitenden Getränks einen Schritt des Unterbrechens der Betätigung der Heizmittel umfasst, die geeignet sind, um das zu erhitzende Getränk zu erhitzen.

3. Verfahren nach einem der vorhergehenden Ansprüche, wobei der Schritt des Einleitens der Portion der ersten Menge des erhitzten Getränks und der Schritt des Erhitzens der zweiten Menge des zuzubereitenden Getränks gleichzeitig erfolgen.

4. Verfahren nach einem der vorhergehenden Ansprüche, wobei die Erhitzungsschritte einen Schritt des Durchleitens des zuzubereitenden Getränks in einem Heizkanal (32) umfasst, wobei der Durchleitungsschritt einen Schritt des kontinuierlichen Durchleitens des zuzubereitenden Getränks in den Heizkanal (32) umfasst, um eine vorgegebene Menge des zubereiteten Getränks zu erhalten.

5. Verfahren nach einem der vorhergehenden Ansprüche, das ferner einen Schritt des Ansaugens des zuzubereitenden Getränks aus einem Behälter (2) umfasst, wobei der Ansaugschritt einen Schritt des Komprimierens einer flexiblen Kammer (10) einer Pumpeneinheit (6) umfasst.

6. Verfahren nach einem der vorhergehenden Ansprüche, wobei die Abgabeschritte einen Schritt des Komprimierens einer flexiblen Kammer (10) einer Pumpeneinheit (6) umfassen.

7. Verfahren nach einem der vorhergehenden Ansprüche, wobei die Erhitzungsschritte und die Abgabeschritte in einem Vakuum ausgeführt werden.

8. Verfahren nach einem der vorhergehenden Ansprüche, wobei die Erhitzungsschritte und die Abgabeschritte unter Anaerobiosebedingungen ausgeführt werden.

9. Verfahren nach einem der vorhergehenden Ansprüche, das ferner einen Schritt des Anordnens eines Behälters (2) zum Aufnehmen des zuzubereitenden Getränks umfasst, der mit einer Vorrichtung zur Zubereitung des Getränks verbindbar ist,
wobei der Anordnungsschritt einen Schritt des Einsetzens eines Anschlusseinsatzes, der geeignet ist, um mit einem Auslass der Vorrichtung verbunden zu werden, durch die Wände des Behälters (2) umfasst,
wobei der Anordnungsschritt den Schritt des Herstellens eines Lochs durch die Seitenwand des Behälters (2) umfasst,
wobei der Schritt des Anordnens des Behälters (2) einen Schritt des Lagerns des Behälters auf einer Auflage der Vorrichtung (1) umfasst.

10. Vorrichtung (1) zur Zubereitung eines Getränks, zum Beispiel Schokolade, die mit einem Behälter (2) verbindbar ist, der geeignet ist, um das zuzubereitende Getränk aufzunehmen, und mit einem Becher (4) verbindbar ist, um ein zubereitetes Getränk aufzunehmen, wobei die Vorrichtung (1) umfasst:
- Ansaugmittel, die geeignet sind, um das zuzubereitende Getränk aus dem Behälter (2) zu saugen;
- Heizmittel, die geeignet sind, um das zuzubereitende Getränk zu erhitzen, um ein auf eine vorgegebene Temperatur erhitztes Getränk zu erhalten;
- Abgabemittel, die geeignet sind, um das erhitzte Getränk in den Becher abzugeben, wobei die Abgabemittel einen Abgabekanal (50) umfassen, der geeignet ist, um das erhitzte Getränk in den Becher (4) abzugeben;
wobei die Vorrichtung **dadurch gekennzeichnet ist, dass** der Abgabenkanal (50) in einem ersten Inbetriebnahmeaufbau vor dem Abgeben des erhitzten Getränks das zuzubereitende Getränk aufnimmt.

11. Vorrichtung (1) nach Anspruch 10, wobei die Vorrichtung in einem zweiten Aufbau am Ende der Herstellung anschließend an die Abgabe des erhitzten Getränks immer noch das zuzubereitende Getränk aufnimmt.

12. Vorrichtung (1) nach Anspruch 10 oder 11, wobei die Vorrichtung **dadurch gekennzeichnet ist, dass** sie ferner Steuerungsmittel (40) umfasst, die geeignet sind, die Heizmittel (30) zu beeinflussen, um die Temperatur des erhitzten Getränks zu beeinflussen.

13. Vorrichtung nach Anspruch 12, wobei die Ansaugmittel eine peristaltische Pumpeneinheit (6) umfassen.

14. Vorrichtung nach Anspruch 13, wobei die peristaltische Pumpeneinheit (6) eine flexible Kammer (10) umfasst, die einen Einlass (12) zum Einlassen des zuzubereitenden Getränks und einen Auslass (14) zum Auslassen des zuzubereitenden Getränks umfasst, wobei die flexible Kammer (10) in einer Fluidverbindung mit den Heizmitteln (30) und dem Behälter (2) steht, und wobei die Pumpeneinheit (6) ferner einen Rotor umfasst, der geeignet ist, mit einer vorgegebenen Geschwindigkeit zu rotieren und wenigstens einen Abschnitt der flexiblen Kammer (10) zu komprimieren, um das zuzubereitende Getränk anzusaugen und es in Richtung der Heizeinrichtungen (30) zu liefern, wobei der Rotor wenigstens ein Drucklager umfasst, das geeignet ist, um die flexible Kammer zu beeinflussen, wobei das Lager aus Nyloil® gefertigt ist.

15. Vorrichtung nach einem der Ansprüche 10 bis 14, wobei die Heizmittel (30) einen Heizkanal (32) umfassen, der für die Durchleitung des zuzubereitenden Getränks geeignet ist, wobei der Kanal extern mit einem Widerstand (34) zur Wärmeerzeugung gekoppelt ist.

16. Vorrichtung nach Anspruch 15, wobei der Kanal sich um eine im Wesentlichen zylindrische Oberfläche windet.

17. Vorrichtung (1) nach einem der Ansprüche 10 bis 16, die ferner Anschlussmittel umfasst, die geeignet sind, eine abgedichtete Fluidverbindung zwischen den Ansaugmitteln und dem Behälter zu erhalten.

18. Vorrichtung nach einem der Ansprüche 10 bis 17, die eine Abdeckung (60) umfasst, die geeignet ist, die Ansaugmittel und die Heizmittel unterzubringen.

## Revendications

1. Méthode de préparation d'une boisson préparée à partir d'une boisson à préparer, ladite méthode étant réalisée avec un dispositif de préparation (1) pouvant être associé à un conteneur (2) adapté pour contenir ladite boisson à préparer et pouvant être associé à une tasse (4) adaptée pour contenir ladite boisson préparée, ladite méthode comprenant les étapes consistant à:
- chauffer une première quantité de ladite boisson à préparer pour obtenir une première quantité de boisson chauffée;
- introduire au moins une portion de ladite première quantité de boisson chauffée dans une conduite de distribution (50) en communication de fluide avec ladite tasse (4);
- distribuer au moins une partie de ladite portion de la première quantité de boisson chauffée à ladite tasse (4);
- chauffer une deuxième quantité de ladite boisson à préparer à une deuxième température, obtenir une deuxième quantité de boisson chauffée;
- introduire au moins une portion de ladite deuxième quantité de boisson chauffée dans ladite conduite de distribution (50) pour éjecter au moins partiellement ladite première quantité de boisson chauffée de ladite conduite de distribution (50),
dans laquelle ladite deuxième température est inférieure à une température limite inférieure pour préparer la boisson.

2. Méthode selon la revendication 1, dans laquelle ladite étape de chauffage de ladite deuxième quantité de ladite boisson à préparer comprend une étape d'interruption de l'actionnement de moyens de chauffage adaptés pour chauffer ladite boisson à chauffer.

3. Méthode selon l'une quelconque des revendications précédentes, dans laquelle ladite étape d'introduction de ladite portion de la première quantité de boisson chauffée et ladite étape de chauffage de ladite deuxième quantité de boisson à préparer sont concomitantes.

4. Méthode selon l'une quelconque des revendications précédentes, dans laquelle lesdites étapes de chauffage comprennent une étape consistant à faire passer ladite boisson à préparer dans une conduite de chauffage (32), ladite étape de passage comprenant une étape de passage continu de ladite boisson à préparer dans ladite conduite de chauffage (32) pour obtenir une quantité donnée de boisson préparée.

5. Méthode selon l'une quelconque des revendications précédentes, comprenant en outre une étape d'aspiration de ladite boisson à préparer à partir d'un conteneur (2), ladite étape d'aspiration comprenant une étape de compression d'une chambre flexible (10) d'une unité de pompage (6).

6. Méthode selon l'une quelconque des revendications précédentes, dans laquelle lesdites étapes de distribution comprennent une étape de compression d'une chambre flexible (10) d'une unité de pompage (6).

7. Méthode selon l'une quelconque des revendications précédentes, dans laquelle lesdites étapes de chauffage et lesdites étapes de distribution sont réalisées sous vide.

8. Méthode selon l'une quelconque des revendications précédentes, dans laquelle lesdites étapes de chauffage et lesdites étapes de distribution sont réalisées dans des conditions anaérobies.

9. Méthode selon l'une quelconque des revendications précédentes, comprenant en outre une étape de placement d'un conteneur (2) adapté pour contenir ladite boisson à préparer à associer à un dispositif pour préparer la boisson,
dans laquelle ladite étape de placement comprend une étape d'insertion dans les parois dudit conteneur (2) d'un insert de raccordement adapté pour être associé à un orifice de sortie dudit dispositif,
dans laquelle ladite étape de placement comprend l'étape de réalisation d'un trou dans ladite paroi du conteneur (2),
dans laquelle ladite étape de placement dudit conteneur (2) comprend une étape de mise en place dudit conteneur dans une place dudit dispositif (1).

10. Dispositif (1) de préparation d'une boisson, par exemple du chocolat, pouvant être associé à un conteneur (2) adapté pour contenir une boisson à préparer et pouvant être associé à une tasse (4) pour contenir une boisson préparée, ledit dispositif (1) comprenant:
- des moyens d'aspiration adaptés pour aspirer ladite boisson à préparer à partir dudit conteneur (2);
- des moyens de chauffage adaptés pour chauffer ladite boisson à préparer pour obtenir une boisson chauffée à une température donnée;
- des moyens de distribution adaptés pour distribuer ladite boisson chauffée dans ladite tasse, lesdits moyens de distribution comprenant une conduite de distribution (50) adaptée pour distribuer ladite boisson chauffée dans ladite tasse (4);
ledit dispositif étant **caractérisé en ce que**, dans une première configuration de départ, avant de distribuer ladite boisson chauffée, ladite conduite de distribution (50) retient ladite boisson à préparer.

11. Dispositif (1) selon la revendication 10, ledit dispositif, dans une deuxième configuration de fin de préparation, après la distribution de la boisson chauffée, retenant toujours ladite boisson à préparer.

12. Dispositif (1) selon la revendication 10 ou 11, ledit dispositif étant **caractérisé en ce qu'**il comprend en outre des moyens de contrôle (40) adaptés pour influer sur lesdits moyens de chauffage (30) pour faire changer ladite température de la boisson chauffée.

13. Dispositif selon la revendication 12, dans lequel le moyen d'aspiration comprend une unité de pompe péristaltique (6).

14. Dispositif selon la revendication 13, dans lequel ladite unité de pompe péristaltique (6) comprend une chambre flexible (10) qui présente un orifice d'entrée (12) pour l'entrée de la boisson à préparer et un orifice de sortie (14) pour la sortie de la boisson à préparer, ladite chambre flexible (10) étant en communication de fluide avec lesdits moyens de chauffage (30) et avec ledit conteneur (2) et dans lequel ladite unité de pompage (6) comprend en outre un rotor adapté pour tourner à une vitesse donnée et pour comprimer au moins une partie de ladite chambre flexible (10) pour aspirer ladite boisson à préparer et la distribuer vers lesdits moyens de chauffage (30), dans lequel ledit rotor comprend au moins un palier de compression adapté pour influer sur ladite chambre flexible, ledit palier étant en nyloil®.

15. Dispositif selon l'une quelconque des revendications 10 à 14, dans lequel ledit moyen de chauffage (30) comprend une conduite de chauffage (32) adaptée pour le passage de ladite boisson à préparer, ladite conduite étant couplée au niveau externe à une résistance (34) pour générer de la chaleur.

16. Dispositif selon la revendication 15, dans lequel la conduite s'enroule autour d'une surface substantiellement cylindrique.

17. Dispositif (1) selon l'une quelconque des revendications 10 à 16, comprenant en outre des moyens de raccordement adaptés pour obtenir un raccord de fluide hermétique entre lesdits moyens d'aspiration et ledit conteneur.

18. Dispositif selon l'une quelconque des revendications 10 à 17, comprenant un revêtement (60) adapté pour abriter lesdits moyens d'aspiration et lesdits moyens de chauffage.
